# EUROPÄISCHE PATENTANMELDUNG

(11) **EP 1 377 048 A1**
(43) Veröffentlichungstag der Anmeldung: **02.01.2004**
(21) Anmeldenummer: 03013720.2
(22) Anmeldetag: 17.06.2003
(51) Int. Cl.: H04N 5/445

(54) **Fernsteuerbares elektrisches oder elektronisches Gerät**

(30) Priorität: 18.06.2002 DE 20210892 U
(71) Anmelder: Kathrein-Werke KG, 83022 Rosenheim (DE)
(72) Erfinder: Exler, Ralf, 83059 Kolbermoor (DE)
(74) Vertreter: Flach, Dieter Rolf Paul, Dipl.-Phys.

(57) **Zusammenfassung**

Ein verbessertes fernsteuerbares Gerät mit unterschiedlichen Einstellreglern und/oder Einstellschaltern zeichnet sich dadurch aus, dass zumindest ein Teil der Einstellregler und/oder Einstellschalter nach Art sog. "Softkeys" gebildet sind, die über jeweils bestimmte Tasten oder Schalter oder Einstellregler einer Fernbedienung aktivierbar sind, wobei in Abhängigkeit eines jeweils vorher unterschiedlich einstellbaren Betriebszustandes, insbesondere über eine Fernbedienung (3), durch Betätigung gleicher Tasten (6a, 6b) an der Fernbedienung (3) und folglich durch Aktivierung bzw. Betätigung der gleichen "Softkeys" an dem ansteuerbaren Gerät durch die vorher erfolgte unterschiedlichte Einstellung des Betriebszustandes unterschiedliche Betriebseinstellungen an dem ansteuerbaren Gerät durchführbar sind.

## Beschreibung

Die Erfindung betrifft ein fernsteuerbares elektrisches oder elektronisches Gerät nach dem Oberbegriff des Anspruches 1.

Insbesondere Telekommunikations-Consumerwaren, wie beispielsweise Fernseher, Rundfunkgeräte, Videorekorder, DVD-Player, CD-Player etc. sind mittels Fernbedienung steuerbar. In der Regel kommen sogenannte Infrarot-Geräte zum Einsatz.

Für die diversen Geräte werden in der Regel unterschiedliche, den jeweiligen Geräten zugeordnete Fernbedienungen eingesetzt.

Daneben sind auch Fernbedienungen bekannt, die so umschaltbar sind, dass beispielsweise neben einem Fernseher auch darüber ein DVD-Player, ein CD-Player, ein Radio etc. angesteuert werden können. Über die Tasten werden beispielsweise Programme ausgewählt, umgeschaltet, Aufnahmetasten oder Stopptasten bedient, Rückspultasten, Vorspultasten, Lautstärke, Stummschaltung etc.

Auch programmierbare Fernbedienungen sind bekannt, oder beispielsweise Fernbedienungen, bei denen die einzelnen Infrarot-Frequenzen für ein bestimmtes Gerät nach Art einer lernbaren Fernbedienung erfasst und die betreffenden Frequenzen abgespeichert werden können.

In all diesen Fällen ist es jedoch erforderlich, dass zur Bedienung eines betreffenden Gerätes die entsprechenden Signale und Signalfrequenzen erfasst und in der Fernbedienung abgespeichert werden müssen. Soll dann beispielsweise anstelle eines Fernsehers der Videorekorder bedient werden, so kann durch eine entsprechende Umschalttaste an der Fernbedienung auf "Videorekorder" geschaltet werden, um nunmehr die vorhandenen Tasten ganz oder teilweise so mit Steuerungsbefehlen zu hinterlegen, dass dann der Videorekorder mittels der hierfür abgespeicherten Frequenzen für die Ansteuerung im gewünschten Sinn angesteuert werden kann.

Aufgabe der vorliegenden Erfindung ist es, demgegenüber eine nochmals verbesserte Möglichkeit der Bedienung von elektrischen oder elektronischen Geräten, insbesondere Kommunikationsgeräten mittels Fernbedienung, zu eröffnen.

Die Aufgabe wird erfindungsgemäß dadurch gelöst, dass sogenannte "Softkeys" in dem entsprechenden elektronischen oder elektrischen Gerät eingebaut sind. Diese werden von dem jeweiligen Betriebszustand des Gerätes abhängig mit unterschiedlichen Funktionen belegt. Mit anderen Worten ist es also nicht erforderlich, dass in der Fernbedienung selbst unterschiedliche Signale, Signalfolgen oder Signalfrequenzen etc. hinterlegt werden müssen, um die unterschiedlichen Funktionen im Gerät auszulösen. So können beispielsweise durch Bedienung einer Taste in dem einen oder in den mehreren Geräten völlig unterschiedliche Funktionen ausgelöst werden, je nachdem in welchem Betriebszustand sich das Gerät befindet.

Wird beispielsweise mittels einer Fernbedienung ein Fernsehgerät bedient und über eine Taste der Fernbedienung beispielsweise die Schaltstellung "Hell-Dunkel" aktiviert, so kann durch Betätigung einer anderen Taste zu größeren oder kleineren Werten eine Verstellung hin zu Helligkeit oder Dunkelheit vorgenommen werden.

Wird durch Betätigung einer anderen Taste beispielsweise die Lautstärkenregelung des betreffenden Gerätes aktiviert, so kann durch die gleiche vorher bediente +/-Taste durch Betätigung hin zu größeren oder kleineren Werten nicht die Helligkeit des Fernsehers verstellt werden, wohl aber die Lautstärkenregelung.

Das Gleiche gilt beispielsweise, wenn die Farbeinstellung des Farbfernsehgerätes aktiviert wird. Wiederum durch Betätigung der gleichen +/-Taste hin zu größeren oder kleineren Einstellwerten wird beispielsweise eine Verschiebung mehr zu Rot- oder Blautönen durchgeführt.

Von daher kann eine Fernbedienung vergleichsweise einfach aufgebaut sein, da sie weniger Tasten als herkömmliche Fernbedienungen benötigt und fast allen Tasten immer die gleichen Signalübertragungen oder Signalübertragungsfrequenz zugeordnet sein können. Nur von dem Empfänger dieser von der Fernbedienung ausgehenden Signale werden dann in Abhängigkeit des jeweiligen Betriebszustandes unterschiedliche Funktionen ausgelöst oder Verstellungen vorgenommen.

Mit anderen Worten werden also die sogenannten "Softkeys" im betroffenen Gerät untergebracht, also auf Empfängerseite, wodurch die einfacher aufgebaute Bedienung auch bei weniger Bedienungstasten oder Einstellmöglichkeiten gleichwohl eine Vielzahl unterschiedlicher Funktionen auslösen kann. Ebenso ist es dadurch möglich, beispielsweise auf der Fernbedienung eine Umschaltung von Fernseher auf Videorekorder und DVD-Player, CD-Player etc. vorzunehmen, so dass dann die gleichen Tasten bei Übertragung der gleichen Signale nunmehr aber nur die anderen Geräte entsprechend ansteuern und die gewünschten Veränderungen vornehmen.

Die erfindungsgemäßen Vorteile erweisen sich dann als günstig, wenn eine einheitliche Empfängersituation vorgesehen ist und dort über eine Gesamt-Steuerungseinrichung je nach dem davor ausgelösten Betriebszustand die unterschiedlichen Geräte angesteuert werden. In diesem erfindungsgemäßen Fall ist also somit bevorzugt nur eine Infrarot-Empfangseinrichtung vorgesehen, über deren nachgeordneter Auswertsituation dann ein nachgeschalteter Fernseher, DVD-Player, CD-Player, Radio etc. angesteuert werden kann.

Die Erfindung wird nachfolgend anhand eines Ausführungsbeispieles näher erläutert.

Dabei zeigen im Einzelnen:
- Figur 1:: eine schematische Darstellung mehrerer Medien-Geräte; und
- Figur 2:: eine schematische Draufsicht auf eine Fernbedienung.

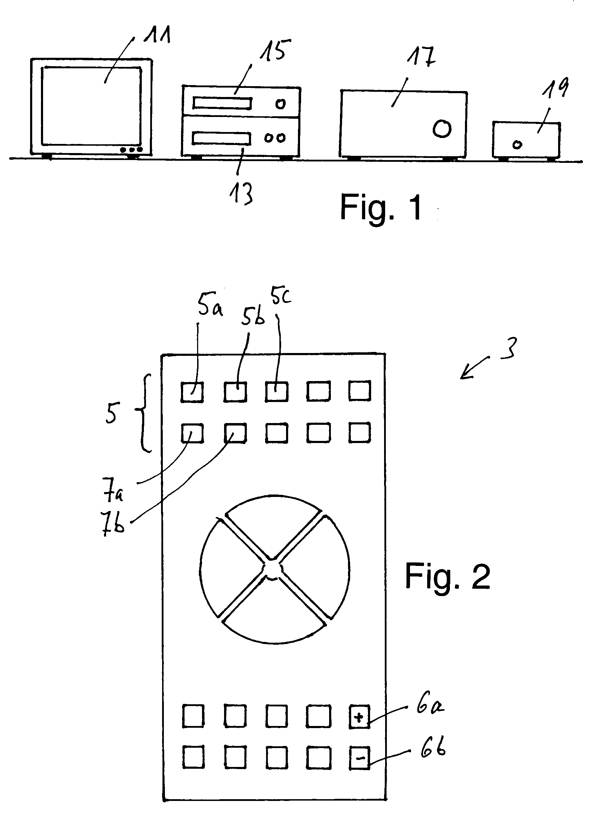

In Figur 1 sind in schematischer Darstellung mehrere Medien-Geräte gezeigt, beispielsweise ein Fernseher, ein DVD-Player, CD-Player, Radio mit Verstärkerteil etc.

Bevorzugt ist der gesamten Geräteanordnung eine einzige Fernbedienungs-Empfängereinrichtung zugeordnet, beispielsweise eine Infrarot-Empfangseinrichtung. Es können aber auch andere Übertragungsmittel, beispielsweise eine elektromagnetische Sende- oder Empfangseinrichtung vorgesehen sein, um die Geräte auch durch Mauern hindurch ansteuern zu können.

In Figur 2 ist ferner schematisch die Draufsicht auf eine Fernbedienung 3 wiedergegeben, auf die nachfolgend eingegangen wird.

Beispielsweise durch Betätigung der Tasten 5, d.h. 5a, 5b, 5c etc., kann eine Ansteuerung des Fernsehers, des DVD-Players, des CD-Players etc. vorgenommen werden. Mit anderen Worten wird durch Drücken der Tasten 5a die nachfolgende Betätigung des Fernsehers, durch die Taste 5b die nachfolgende Betätigung des DVD-Players, durch die Taste 5c die Betätigung des CD-Players usw. ausgelöst.

Werden anschließend beispielsweise die Tasten 6a zur Veränderung zu größeren Einstellwerten bzw. 6b zur Veränderung zu kleineren Einstellwerten betätigt (es kann sich hierbei beispielsweise auch um einen Wipp-Schalter 6 handeln), so wird bei zuvor betätigter Taste 5a für den Fernseher und beispielsweise die Lautstärke für den Fernseher verändert. Würde man zuvor die Taste 5d für die Betätigung des Radios/Verstärkers betätigen, so würde ein Drücken auf die Taste 6a die Lautstärke am Radio erhöhen und bei Betätigen der Taste 6b die Lautstärke am Radio verringern. Denn durch das zwischenzeitliche Auslösen der Taste 5d wird auf der Empfängerseite (Geräteseite) in Abhängigkeit des dadurch ausgelösten Zustandes nunmehr ein Softkey so programmiert bzw. hinterlegt, dass bei der nachfolgenden Betätigung der Taste 6a und 6b nunmehr nicht mehr der Fernseher, sondern der Verstärker angesteuert wird.

Wird beispielsweise die Taste 7a angesteuert, so soll durch die Softkey-Steuerung im Fernseher der Zustand "Helligkeitseinstellung" ausgelöst werden. Durch nachfolgende Betätigung der Tasten 6a und 6b wird dann automatisch die Helligkeit der Bilddarstellung erhöht oder erniedrigt.

Wird beispielsweise die Taste 7b betätigt, so wird dadurch auf der Empfängerseite der Betriebszustand "Farbeinstellung" aktiviert. Ebenfalls wieder durch Drücken der Taste 6a und 6b wird weiterhin das gleiche Sendesignal von der Fernbedienung übertragen, löst aber nunmehr durch die andere Hinterlegung der geräteseitig hinterlegten Softkey-Empfangstaste nunmehr die Zustandsänderung "Farbeinstellung" aus, so dass die Farben beispielsweise mehr hin zu stärkeren Farben oder mehr hin zu blasseren Farben bis hin zum Übergang zu schwarz/weiß erstellt werden.

Aus dieser Schilderung ergibt sich also, dass nicht die Tasten der Fernbedienung mit unterschiedlichen Sendesignalen und Sendecodes zur Betätigung der unterschiedlichen Geräte und Funktionen hinterlegt werden müssen, sondern dass die gleichen Tasten unterschiedliche Funktionen auslösen, je nachdem in welchem Betriebszustand sich die Empfängerseite der anzusteuernden Geräte befindet. Dabei können unterschiedliche Betriebszustände eines Gerätes durch die gleichen Tasten der Fernbedienung betätigt werden.

Anhand des geschilderten Ausführungsbeispieles ist aber auch ersichtlich, dass bevorzugt über eine gemeinsame Empfängerseite auch unterschiedliche Funktionen an unterschiedlichen Geräten über die gleichen Tasten mit den gleichen Sendesignalen der Fernbedienung betätigt werden können.

Dazu ist in Figur 1 ein Fernseher 11, ein DVD-Player 13, ein CD-Player 15 und eine Verstärker-/Radio-Kombination 17 dargestellt. Allen diesen Geräten ist eine gemeinsame Infrarotempfangssteuerung 19 zugeordnet, die über entsprechende Kabeln mit allen Geräten zusammengeschaltet ist. Über die Fernbedienung werden dann das Infrarotempfangsgerät 19 die entsprechenden, von der Fernbedienung ausgelösten Sendesignale oder Sendecodes empfangen, wobei nunmehr durch eine einheitliche Folgesteuerung je nach Betriebszustand ein "Softkey" entsprechend belegt und über die Fernbedienung dann ausgelöst wird, so dass darüber beispielsweise ein bestimmtes Gerät, d.h. beispielsweise das Fernsehgerät angesteuert wird und dabei nochmals ein bestimmter Betriebszustand softkeymäßig hinterlegt wird, also beispielsweise der Betriebszustand "Lautstärkeeinstellung vornehmen" ausgelöst wird. Durch Betätigung der Tasten 6a/6b wird dann in dieser Betriebssituation nur die Lautstärkeregelung vorgenommen. Durch Betätigung einer anderen Taste, beispielsweise 5c, wird dann der Radio-Verstärker aktivert, so dass z. B. bei Betätigung der Taste 7b der CD-Player aktiviert wird und dort beispielsweise der Betriebszustand "Auswahl einer bestimmten Liedfolge" aktiviert ist, so dass bei Betätigung der Tasten 6a oder 6b zu einem nächsten oder vorhergehenden Interpreten umgeschaltet werden kann.

Schließlich wird auch noch angemerkt, dass die Form und/oder die Lage der Softkeys auf der Fernbedieneinheit zum intuitiven Erkennen sich auf der Darstellung des Anzeigegerätes wiederum vorzugsweise in der Form und/oder der Lage abbilden.

## Patentansprüche

1. Fernsteuerbares Gerät mit unterschiedlichen Einstellreglern und/oder Einstellschaltern, **dadurch gekennzeichnet, dass** zumindest ein Teil der Einstellregler und/oder Einstellschalter nach Art sog. "Softkeys" gebildet sind, die über jeweils bestimmte Tasten oder Schalter oder Einstellregler einer Fernbedienung aktivierbar sind, wobei in Abhängigkeit eines jeweils vorher unterschiedlich einstellbaren Betriebszustandes, insbesondere über eine Fernbedienung (3), durch Betätigung gleicher Tasten (6a, 6b) an der Fernbedienung (3) und folglich durch Aktivierung bzw. Betätigung der gleichen "Softkeys" an dem ansteuerbaren Gerät durch die vorher erfolgte unterschiedlichte Einstellung des Betriebszustandes unterschiedliche Betriebseinstellungen an dem ansteuerbaren Gerät durchführbar sind.

2. Gerät nach Anspruch 1, **dadurch gekennzeichnet, dass** bei Betätigung zumindest einiger Tasten (6a, 6b) der Fernbedienung stets das gleiche Sendesignal ausgesandt wird, worüber die gleichen "Softkeys" an dem ansteuerbaren Gerät aktiviert bzw. betätigt werden, wobei in Abhängigkeit des zuvor ausgewählten unterschiedlichen Betriebszustandes an dem ansteuerbaren Gerät unterschiedliche Funktionen oder Einstellungen vornehmbar sind.

3. Gerät nach Anspruch 1 oder 2, **dadurch gekennzeichnet, dass** mehreren mittels Fernbedienung (3) ansteuerbaren Geräten eine gemeinsame Empfangseinrichtung (19) zugeordnet ist, worüber zustandsabhängig von der Vorauswahl oder Aktivierung eines bestimmten Gerätes beim Empfang eines gleichen Auslöse-, Regel- und/oder Sende-Code-Signals vor einer Fernbedienung (3) in Abhängigkeit der vorab erfolgten Geräteauswahl und/oder des Gerätezustandes eine "softkey"-mäßig vorgegebene unterschiedliche Bedienung durchführbar ist.

4. Gerät nach Anspruch 1 oder 3, **dadurch gekennzeichnet, dass** das ansteuerbare Gerät mit einer Anzeigeeinrichtung oder einem Bildschirm versehen ist, auf welchem Softkeys abbildbar sind.

5. Gerät nach Anspruch 4, **dadurch gekennzeichnet, dass** die auf einer Anzeigeeinrichtung oder einem Bildschirm des ansteuerbaren Gerätes abbildbaren Softkeys in ihrer Form und/oder in ihrer Lage so abbildbar sind, dass sie zum intuitiven Erkennen der Form und/oder der Lage der Tasten auf der Fernbedienung (3) entsprechen.
